# EUROPEAN PATENT APPLICATION

(11) **EP 4 481 171 A1**
(43) Date of publication of application: **25.12.2024**
(21) Application number: 24172022.6
(22) Date of filing: 23.04.2024
(51) Int. Cl.: F02C 3/05, F01D 11/22, F02C 3/08, F02C 3/30, F02C 6/18, F02C 7/143, F02C 3/20

(54) **WATER ACTUATED TIP CLEARANCE CONTROL SYSTEM FOR TURBINE ENGINE**

(30) Priority: 23.06.2023 US 202318213667
(71) Applicant: RTX Corporation, Farmington, CT 06032 (US)
(72) Inventor: SOBANSKI, Jon E., Glastonbury, 06033 (US); MORTON, Jeffrey T., Manchester, 06040 (US); BREAULT, Andrew E., Bolton, 06043 (US)
(74) Representative: Dehns

(57) **Abstract**

An assembly for an aircraft powerplant includes a bladed rotor (40,80), a shroud (100) and an actuation system (108). The bladed rotor (40,80) includes a rotor base (82) and a plurality of rotor blades (84) arranged circumferentially around and connected to the rotor base (82). The shroud (100) is adjacent to tips (92) of the rotor blades (84). The actuation system (108) includes a water source (118) and an actuator (120) coupled to the shroud (100). The actuation system (108) is configured to direct a quantity of water from the water source (118) to the actuator (120) to control clearance (104) between the shroud (100) and the tips (92) of the rotor blades (84).

## Description

### BACKGROUND OF THE DISCLOSURE

### 1. Technical Field

This invention relates generally to a turbine engine and, more particularly, to a tip clearance control system for the turbine engine.

### 2. Background Information

A gas turbine engine may include a tip clearance control system to maintain a select clearance between blade tips of a rotor and an adjacent shroud. Various types and configurations of tip clearance control systems are known in the art. While these known tip clearance control systems have various benefits, there is still room in the art for improvement.

### SUMMARY OF THE DISCLOSURE

According to an aspect of the present invention, an assembly is provided for an aircraft powerplant. This assembly includes a bladed rotor, a shroud and an actuation system. The bladed rotor includes a rotor base and a plurality of rotor blades arranged circumferentially around and connected to the rotor base. The shroud is adjacent tips of the rotor blades. The actuation system includes a water source and an actuator coupled to the shroud. The actuation system is configured to direct a quantity of water from the water source to the actuator to control clearance between the shroud and the tips of the rotor blades.

According to another aspect of the present invention, another assembly is provided for an aircraft powerplant. This assembly includes an engine core, a flowpath, a recovery system and a tip clearance control system. The engine core includes a compressor section, a combustor section, a turbine section, a bladed rotor and a shroud. The flowpath extends through the compressor section, the combustor section and the turbine section. The flowpath extends along the shroud and across the bladed rotor. The recovery system is configured to recover water from combustion products flowing within the flowpath downstream of the combustor section. The tip clearance control system is configured to control clearance between the shroud and the bladed rotor using at least some of the water recovered by the recovery system.

According to still another aspect of the present invention, another assembly is provided for an aircraft powerplant. This assembly includes a propulsor rotor, an engine core and a tip clearance control system. The engine core is configured to drive rotation of the propulsor rotor. The engine core includes a compressor section, a combustor section, a turbine section, a bladed rotor and a shroud. The tip clearance control system is configured to control a clearance gap between the shroud and the bladed rotor using water as an actuation fluid.

Optionally, and in accordance with any of the above, the tip clearance control system may include an actuator configured to move the shroud relative to the bladed rotor. The actuator may receive and may be actuated by the at least some of the water recovered by the recovery system.

Optionally, and in accordance with any of the above, the bladed rotor may be configured as or otherwise include a radial flow rotor.

Optionally, and in accordance with any of the above, the assembly may also include an engine core and a flowpath. The engine core may include a compressor section, a combustor section and a turbine section. The flowpath may extend through the compressor section, the combustor section and the turbine section from an inlet into the flowpath to an exhaust from the flowpath. The flowpath may extend across the bladed rotor.

Optionally, and in accordance with any of the above, the compressor section may include the bladed rotor and the shroud.

Optionally, and in accordance with any of the above, the water source may be configured as or otherwise include a water reservoir.

Optionally, and in accordance with any of the above, the assembly may also include an engine core, a recovery system and a flowpath. The engine core may include a compressor section, a combustor section and a turbine section. The recovery system may include a condenser, and the recovery system may be configured as the water source. The flowpath may extend through the compressor section, the combustor section, the turbine section and the condenser from an inlet into the flowpath to an exhaust from the flowpath. The recovery system may be configured to condense gaseous water flowing within the flowpath into liquid water using the condenser. The recovery system may be configured to direct at least some of the liquid water to the actuator as the quantity of water.

Optionally, and in accordance with any of the above, the recovery system may also be configured to provide a second quantity of the liquid water to the engine core.

Optionally, and in accordance with any of the above, the recovery system may also include an evaporator. The recovery system may be configured to evaporate some of the liquid water into steam. The recovery system may be configured to provide the steam to the engine core.

Optionally, and in accordance with any of the above, the flowpath may extend through the evaporator. The evaporator may be arranged fluidly between the turbine section and the exhaust along the flowpath.

Optionally, and in accordance with any of the above, the evaporator may be arranged fluidly between the turbine section and the condenser along the flowpath.

Optionally, and in accordance with any of the above, the assembly may also include a bypass flowpath bypassing the engine core and extending through the condenser.

Optionally, and in accordance with any of the above, the assembly may also include a fuel system, and the fuel system may include a fuel circuit extending through the condenser. The fuel system may be configured to deliver fuel through the fuel circuit to the combustor section.

Optionally, and in accordance with any of the above, the fuel may be or otherwise include non-hydrocarbon fuel.

Optionally, and in accordance with any of the above, the fuel may be or otherwise include hydrocarbon fuel.

Optionally, and in accordance with any of the above, the actuator may be configured as or otherwise include a hydraulic cylinder.

Optionally, and in accordance with any of the above, the actuator may be configured as or otherwise include a thermal link wetted by the quantity of water.

Optionally, and in accordance with any of the above, the bladed rotor may be rotatable about an axis. The actuation system may be configured to translate the shroud axially along the axis using the actuator to control the clearance between the shroud and the tips of the plurality of rotor blades.

Optionally, and in accordance with any of the above, the actuation system may be configured to pivot a section of the shroud using the actuator to control the clearance between the shroud and the tips of the rotor blades.

Optionally, and in accordance with any of the above, the assembly may also include a mechanical load and a powerplant engine configured to power the mechanical load. The powerplant engine may include the bladed rotor and the shroud.

Optionally, and in accordance with any of the above, the assembly may also include a power turbine section configured to drive rotation of a propulsor rotor. The mechanical load may be configured as or otherwise include the propulsor rotor.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of a powerplant with a tip clearance control system.
FIG. 2 is a partial schematic illustration of a compressor section of the powerplant with the tip clearance control system.
FIG. 3 is a perspective illustration of a bladed engine rotor.
FIGS. 4A and 4B are partial schematic illustrations of the compressor section with a shroud translated to various positions.
FIGS. 5A and 5B are partial schematic illustrations of the compressor section with the shroud pivoted to various positions.
FIG. 6 is a schematic illustration of an end of a sectioned shroud.
FIGS. 7 and 8 are partial schematic illustrations of various actuators for the tip clearance control system.
FIG. 9 is a partial schematic illustration of a fuel system for the powerplant.
FIG. 10 is a partial schematic illustration of the powerplant with a water and/or energy recovery system.

### DETAILED DESCRIPTION

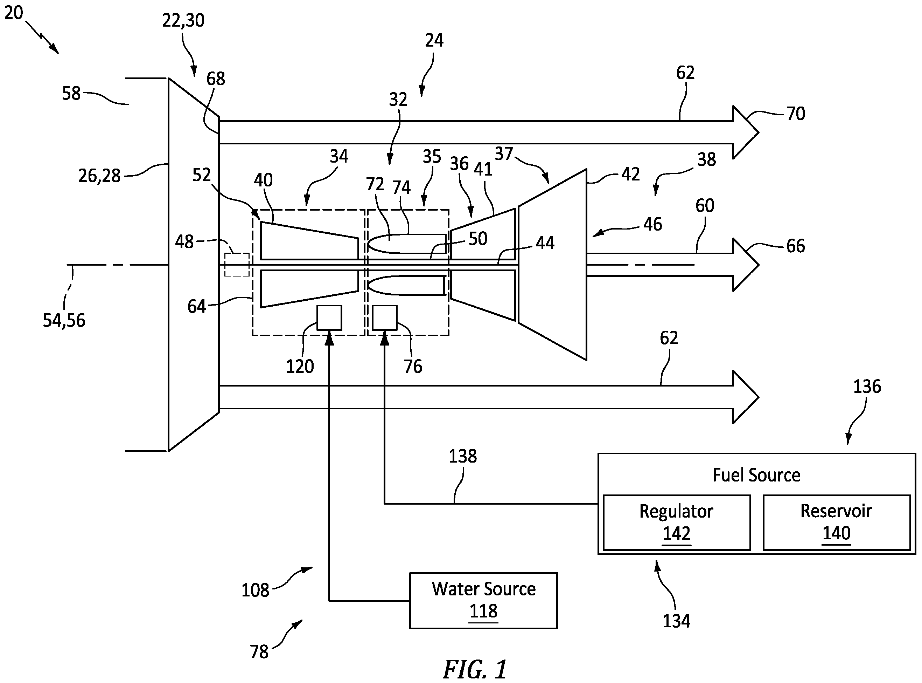

FIG. 1 illustrates a powerplant 20 for an aircraft. The aircraft may be an airplane, a helicopter, a drone (e.g., an unmanned aerial vehicle (UAV)) or any other manned or unmanned aerial vehicle or system. The powerplant 20 may be configured as, or otherwise included as part of, a propulsion system for the aircraft. The powerplant 20 may also or alternatively be configured as, or otherwise included as part of, an electrical power system for the aircraft. The powerplant 20 of FIG. 1 includes a mechanical load 22 and a powerplant engine 24 (e.g., a gas turbine engine) configured to power the mechanical load 22.

The mechanical load 22 of FIG. 1 includes at least one driven rotor 26. This driven rotor 26 may be configured as a bladed propulsor rotor for the aircraft propulsion system. The propulsor rotor may be a ducted propulsor rotor or an open propulsor rotor; e.g., an un-ducted propulsor rotor. An example of the ducted propulsor rotor is a fan rotor 28 for a ducted propulsion system; e.g., a turbofan propulsion system. Examples of the open propulsor rotor include a propeller rotor for a propeller propulsion system (e.g., a turboprop propulsion system), a rotorcraft rotor (e.g., a main helicopter rotor) for a rotorcraft propulsion system (e.g., a turboshaft propulsion system), a pusher fan rotor for a pusher fan propulsion system, and a propfan rotor for a propfan propulsion system. Alternatively, the driven rotor 26 may be configured as a generator rotor of an electric power generator for the aircraft electrical power system; e.g., an auxiliary power unit (APU) system. However, for ease of description, the mechanical load 22 is described below as a fan section 30 of the powerplant 20 and the driven rotor 26 is described below as the fan rotor 28.

The powerplant engine 24 of FIG. 1 includes a turbine engine core 32; e.g., a gas generator. This engine core 32 includes a core compressor section 34, a core combustor section 35 and a core turbine section 36. The powerplant engine 24 of FIG. 1 also includes a power turbine (PT) section 37 and an exhaust section 38. Here, the core turbine section 36 is configured as a high pressure turbine (HPT) section of the powerplant engine 24, and the PT section 37 is configured as a low pressure turbine (LPT) section of the powerplant engine 24.

Each of the powerplant sections 34, 36 and 37 of FIG. 1 includes a respective bladed rotor 40-42. The fan rotor 28 of FIG. 1 is connected to and driven by the PT rotor 42 through a low speed shaft 44. At least (or only) the fan rotor 28, the low speed shaft 44 and the PT rotor 42 may form a low speed rotating assembly 46; e.g., a low speed spool. This low speed rotating assembly 46 may be configured as a direct drive rotating assembly where the fan rotor 28 and the PT rotor 42 rotate at a common speed. The low speed rotating assembly 46, however, may alternatively be configured as a geared rotating structure with a geartrain 48 (e.g., an epicyclic gearbox) coupled between the fan rotor 28 and the PT rotor 42. With such an arrangement, the fan rotor 28 rotates at a different (e.g., slower) speed than the PT rotor 42. The compressor rotor 40 of FIG. 1 is connected to and driven by the HPT rotor 41 through a high speed shaft 50. At least (or only) the compressor rotor 40, the high speed shaft 50 and the HPT rotor 41 may form a high speed rotating assembly 52; e.g., a high speed spool. Each of the powerplant rotating assemblies 46, 52 is supported by a plurality of bearings and rotates about a respective rotational axis 54, 56, which rotational axes 54 and 56 may be coaxial or offset (e.g., angled and/or spaced) from one another.

During operation of the powerplant 20 of FIG. 1, air enters the powerplant 20 through an airflow inlet 58 into the powerplant 20. This air is directed through the fan section 30 and into a core flowpath 60 (e.g., annular core flowpath) and a bypass flowpath 62 (e.g., annular bypass flowpath). The core flowpath 60 extends sequentially through the compressor section 34, the combustor section 35, the turbine section 36, the PT section 37 and the exhaust section 38 from an airflow inlet 64 into the core flowpath 60 to a combustion products exhaust 66 from the core flowpath 60. The air within the core flowpath 60 may be referred to as "core air". The bypass flowpath 62 extends through a bypass duct and bypasses (e.g., is radially outboard of and extends along) the powerplant engine 24 and its engine core 32, from an airflow inlet 68 into the bypass flowpath 62 to an airflow exhaust 70 from the bypass flowpath 62. The air within the bypass flowpath 62 may be referred to as "bypass air". Briefly, the core inlet 64 and the bypass inlet 68 may each be fluidly coupled with, adjacent and downstream of the fan section 30. The airflow inlet 58, the core exhaust 66 and the bypass exhaust 70 may each be fluidly coupled (e.g., independently, directly) with an environment external to the powerplant 20; e.g., an external environment outside of the aircraft.

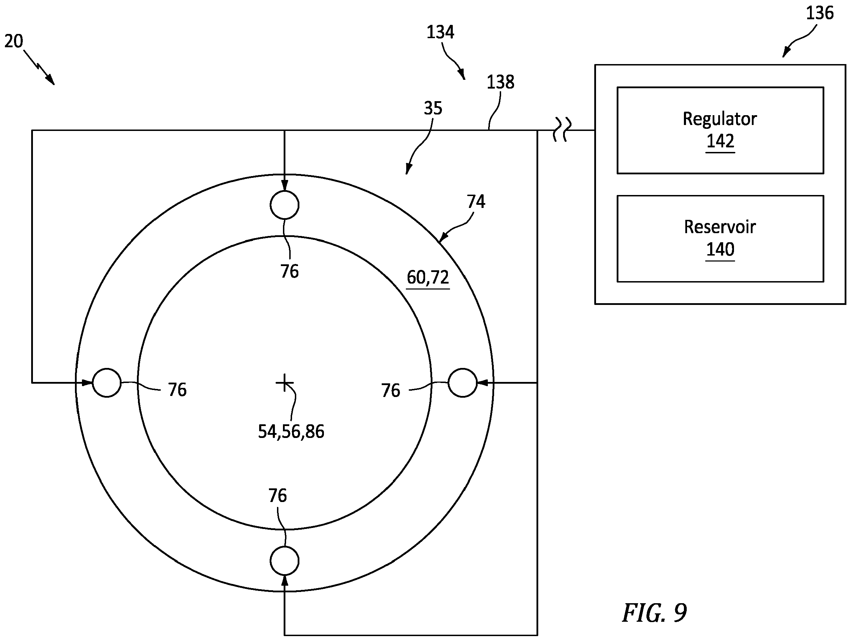

The core air is compressed by the compressor rotor 40 and directed into a combustion chamber 72 (e.g., an annular combustion chamber) of a combustor 74 (e.g., an annular combustor) in the combustor section 35. Fuel is injected into the combustion chamber 72 by one or more fuel injectors 76 (see also FIG. 9) and mixed with the compressed core air to provide a fuel-air mixture. This fuel-air mixture is ignited and combustion products thereof flow through and sequentially cause the HPT rotor 41 and the PT rotor 42 to rotate. The rotation of the HPT rotor 41 drives rotation of the compressor rotor 40 and, thus, compression of the air received from the core inlet 64. The rotation of the PT rotor 42 drives rotation of the fan rotor 28, which propels the bypass air through and out of the bypass flowpath 62. The propulsion of the bypass air may account for a majority of thrust generated by the aircraft propulsion system. Of course, where the mechanical load 22 also or alternatively includes the generator rotor, the rotation of the PT rotor 42 may drive the electric power generator to generate electricity.

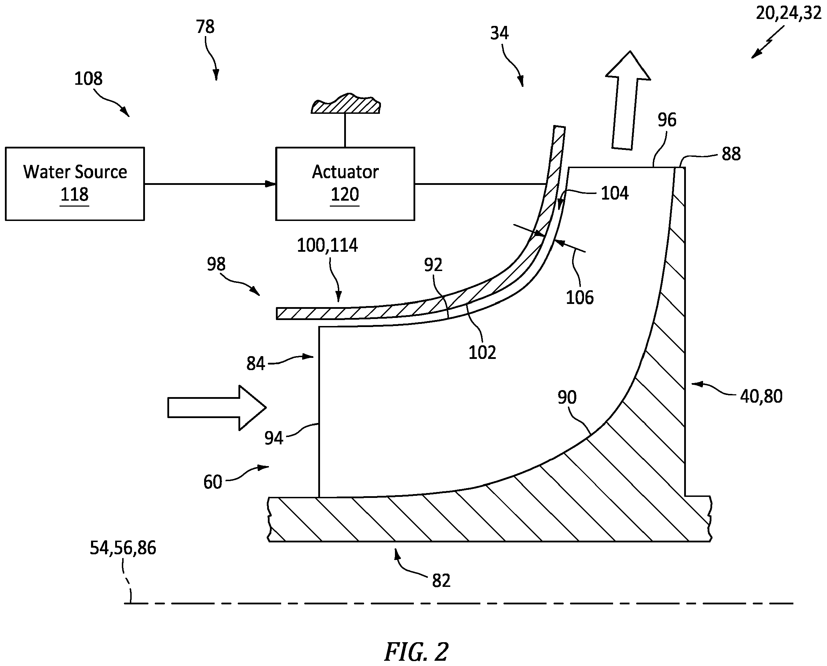

Referring to FIG. 2, the powerplant 20 includes a tip clearance control system 78 for a bladed engine rotor 80 within the powerplant engine 24. For ease of description, the engine rotor 80 is generally described below as, or part of, the compressor rotor 40. It is contemplated, however, the engine rotor 80 may alternatively be configured as, or included as part of, another bladed rotor within the powerplant engine 24.

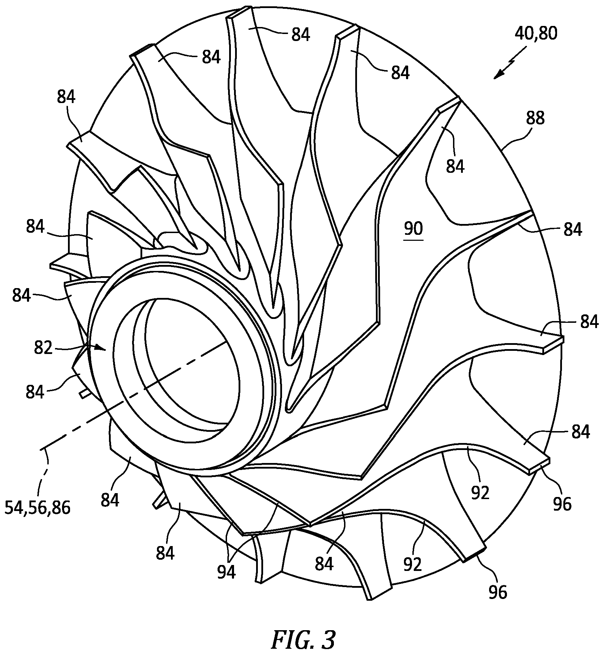

Referring to FIG. 3, the engine rotor 80 may be configured as or otherwise include a radial flow rotor. The engine rotor 80 of FIG. 3, for example, is configured as a radial flow compressor rotor; e.g., an axial inflow-radial outflow compressor rotor, a compressor impeller rotor, etc. The engine rotor 80 includes a rotor base 82 (e.g., a hub, a disk, etc.) and a plurality of rotor blades 84 (e.g., vanes, airfoil, etc.).

Referring to FIG. 2, the rotor base 82 projects axially along an axis 86; e.g., the rotational axis 56 of the high speed rotating assembly 52 of FIG. 1. The rotor base 82 projects radially (in a radial outward direction away from the axis 86) to a radial outer side 88 of the engine rotor 80 and its rotor base 82. The rotor base 82 forms a platform with an inner flowpath surface 90. This inner flowpath surface 90 may have a curved (e.g., arcuate, quarter circular, splined, etc.) sectional geometry when viewed, for example, in an axial reference plane parallel with (e.g., including) the axis 86. With this arrangement, the rotor base 82 projects radially (in the radial outward direction) and axially to the inner flowpath surface 90.

Referring to FIG. 3, the rotor blades 84 are arranged circumferentially around the axis 86 and the rotor base 82 in an annular array; e.g., a circular array. Each of the rotor blades 84 is connected (e.g., formed integral with or mechanically fastened, welded, brazed and/or otherwise attached to) the rotor base 82. Referring to FIG. 2, each rotor blade 84 projects axially out from the rotor base 82 and its inner flowpath surface 90 along the axis 86 to a tip 92 of the respective rotor blade 84 and an axial end 94 of the respective rotor blade 84. Each rotor blade 84 projects radially out from the rotor base 82 and its inner flowpath surface 90 (in the radial outward direction) to its blade tip 92 and a radial end 96 of the respective rotor blade 84. The blade tip 92 projects radially inwards towards the axis 86 from the blade radial end 96, and the blade tip 92 projects axially along the axis 86 to the blade axial end 94. The blade axial end 94 forms a leading edge of the respective rotor blade 84. The blade radial end 96 forms a trailing edge of the respective rotor blade 84. Referring to FIG. 3, each rotor blade 84 has a pressure side (e.g., a concave side) and a suction side (e.g., a convex side).

Referring again to FIG. 2, the engine rotor 80 is housed within a stationary structure 98 of the powerplant engine 24 and its engine core 32. This stationary structure 98 includes an outer shroud 100 (e.g., a blade outer air seal (BOAS)) arranged next to and outboard of the engine rotor 80. The outer shroud 100 of FIG. 2, for example, is disposed radially and/or axially adjacent the blade tips 92. This outer shroud 100 extends circumferentially around the engine rotor 80, thereby circumscribing the rotor blades 84 and their blade tips 92. The outer shroud 100 forms an outer flowpath surface 102 opposite the inner flowpath surface 90. This outer flowpath surface 102 may have a curved (e.g., arcuate, quarter circular, splined, etc.) sectional geometry when viewed, for example, in the axial reference plane. With this arrangement, a portion of the core flowpath 60 within the compressor section 34 extends longitudinally across the engine rotor 80, and is bounded (e.g., radially and/or axially) between the inner flowpath surface 90 and the outer flowpath surface 102. The outer shroud 100 thereby forms an outer flowpath wall along the core flowpath 60 within the compressor section 34.

Efficiency of the compressor section 34 and the powerplant engine 24 in general may be affected by clearance between the engine rotor 80 and the outer shroud 100. A clearance gap 104, for example, is provided between the engine rotor 80 and the outer shroud 100. This clearance gap 104 has a height 106 which extends radially and/or axially from the blade tips 92 to the outer flowpath surface 102. The clearance gap 104 and its height 106 may be sized large enough to prevent (or significantly reduce likelihood of) rubbing between each blade tip 92 and the outer shroud 100 and its outer flowpath surface 102. However, as the clearance gap 104 and its height 106 increase, core air leakage across the blade tip 92 also increases. Increasing core air leakage across the blade tips 92 reduces a volume of the core air compressed by the engine rotor 80. Increasing core air leakage across the blade tips 92 may also increase boundary layer turbulence along the outer flowpath surface 102. Thus, as core air leakage across the blade tips 92 increases, compressor section efficiency decreases. Therefore, the clearance gap 104 and its height 106 are typically sized large enough to prevent (or significantly reduce likelihood of) rubbing between the blade tips 92 and the outer shroud 100 and its outer flowpath surface 102, while small enough to minimize core air leakage across the blade tips 92.

If left alone, the clearance gap 104 and its height 106 may change throughout powerplant engine operation. For example, the engine rotor 80 and the outer shroud 100 may be made from different materials (e.g., metal alloys) and/or exposed to different temperatures. The engine rotor 80 and the outer shroud 100 therefore may thermally grow and/or contract at different rates. The differentials in thermal growth and/or contraction may be particularly prevalent where the core air flowing within the compressor section 34 is (e.g., continuously, selectively and/or progressively) intercooled.

The tip clearance control system 78 of FIG. 2 is provided to accommodate, *inter alia,* differentials in thermal growth and/or contraction between the engine rotor 80 and the outer shroud 100. More particularly, the tip clearance control system 78 is configured to control (e.g., maintain, change, etc.) the clearance between the engine rotor 80 and the outer shroud 100. The tip clearance control system 78 of FIG. 2, for example, includes the outer shroud 100 and an actuation system 108.

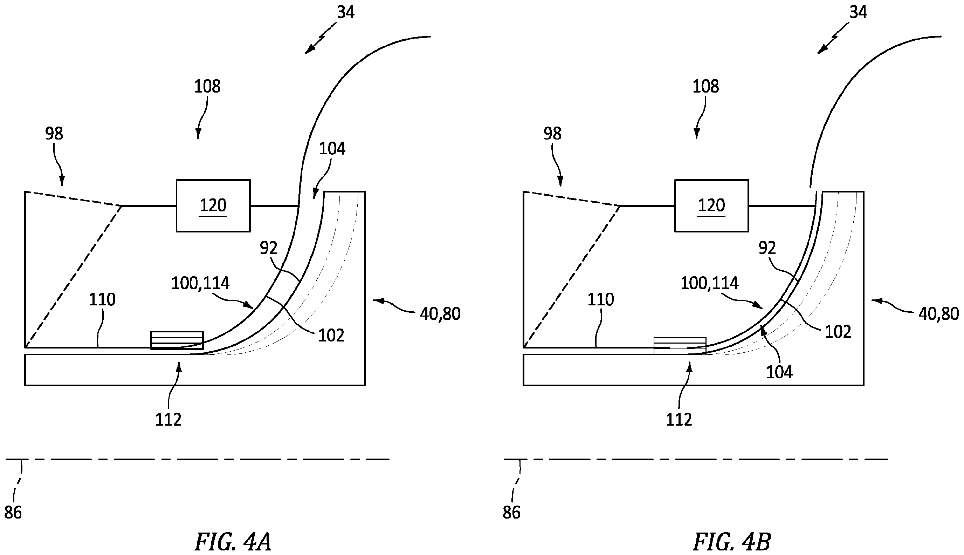

The outer shroud 100 is configured to move relative to the engine rotor 80. The outer shroud 100 of FIGS. 4A and 4B, for example, is coupled to an adjacent (e.g., upstream) stationary flowpath wall 110 (and/or another stationary support structure) through a sliding joint 112. With this arrangement, the outer shroud 100 is configured to axially translate (e.g., slide) along the axis 86 between a first position (e.g., see FIG. 4A) and a second position (e.g., see FIG. 4B), as well as to various intermediate positions between the first and the second positions. Here, the outer shroud 100 of FIGS. 4A and 4B may be configured as a unitary, full-hoop body circumscribing the axis 86 and the engine rotor 80. Alternatively, a plurality of discrete (e.g., arcuate) shroud sections 114 may be arranged side-by-side about the axis 86 and the engine rotor 80 to collectively form the outer shroud 100.

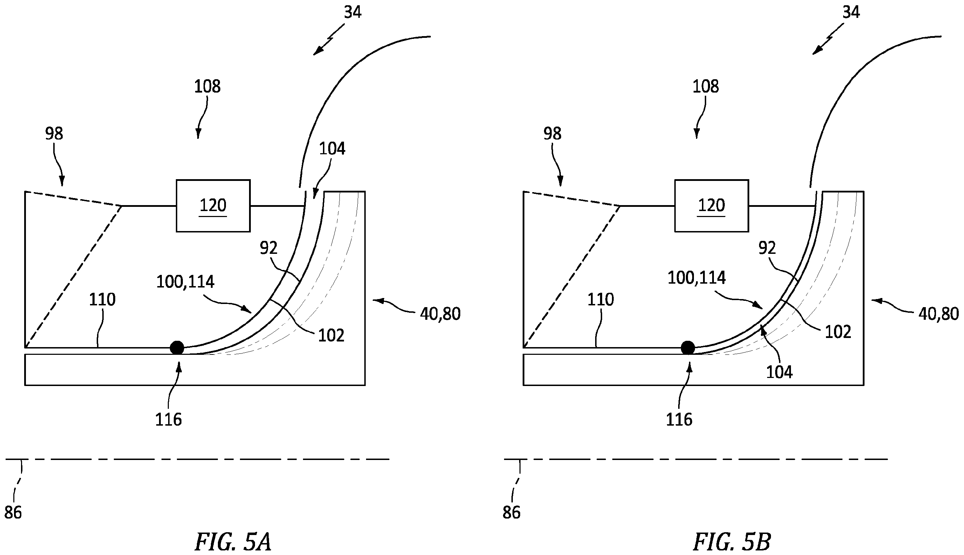

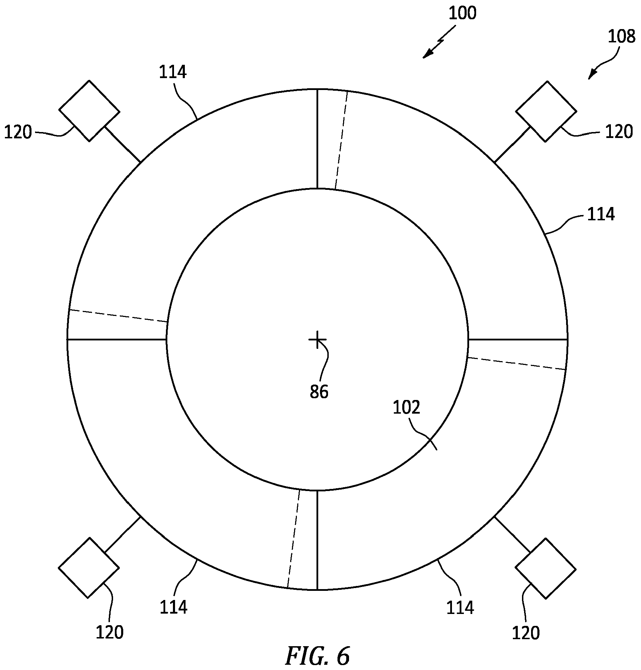

In another example, referring to FIGS. 5A and 5B, the outer shroud 100 includes the plurality of shroud sections 114; see also FIG. 6. Each of these shroud sections 114 may be coupled to the stationary flowpath wall 110 (and/or another stationary support structure) through a respective pivot joint 116 (and/or bending joint). With this arrangement, each shroud section 114 is configured to pivot about a respective pivot axis between a first position (e.g., see FIG. 5A) and a second position (e.g., see FIG. 5B), as well as to various intermediate positions between the first and the second positions. Referring to FIG. 6, as the shroud sections 114 pivot towards (or to) the second position, each shroud section 114 may laterally overlap (or further laterally overlap) at least one (or both) of its circumferentially neighboring (e.g., adjacent) shroud sections 114 to facilitate the pivoting motion. The outer shroud 100 of the present disclosure, however, is not limited to the exemplary movable connections and/or types of movement described above. The outer shroud 100, for example, may alternatively be coupled via a flexible joint and/or various other types of couplings.

Referring to FIG. 2, the actuation system 108 includes a (e.g., onboard) water source 118 and one or more actuators 120 fluidly coupled with the water source 118. Each of the actuators 120 is operatively coupled to the outer shroud 100 (and to one or more of its shroud sections 114 as applicable). This actuation system 108 is configured to direct a quantity of liquid water (H₂O) from the water source 118 to each actuator 120 to actuate operation of the respective actuator 120. By selectively providing the water to each actuator 120, the actuation system 108 may change a position, an orientation and/or a configuration of the outer shroud 100 (and one or more of its shroud sections 114 as applicable) and thereby control the clearance between the outer shroud 100 and the blade tips 92. Moreover, by utilizing water as the actuation fluid for the actuators 120, use of compressible fluids such as air and/or combustible fluids such as fuel may be avoided.

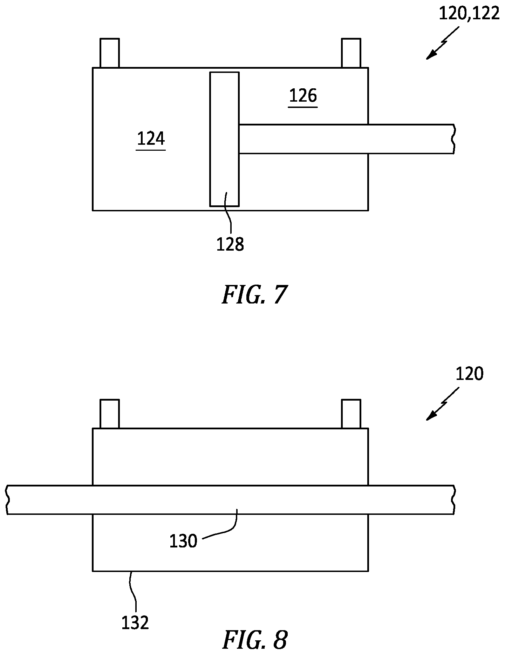

In some embodiments, referring to FIG. 7, one or more of the actuators 120 may each be configured as or otherwise include a hydraulic cylinder 122. The water, for example, may be selectively directed into or extracted from one or more internal chambers 124 and 126 within the hydraulic cylinder 122, which internal chambers 124 and 126 are separated by a piston 128. By increasing the quantity of the water within the first internal chamber 124 to one side of the piston 128, the water pushes the piston 128 in a first direction increasing a length of the hydraulic cylinder 122. By increasing the quantity of the water within the second internal chamber 126 to the other side of the piston 128, the water pushes the piston 128 in a second direction (opposite the first direction) decreasing the length of the hydraulic cylinder 122.

In some embodiments, referring to FIG. 8, one or more of the actuators 120 may each be configured as or otherwise include a thermal link 130. This thermal link 130 may be bathed, exposed and/or otherwise wetted by the water. By flowing relatively cool water to and/or along the thermal link 130 (e.g., within a sleeve 132 or other housing at least partially surrounding the thermal link 130), the thermal link 130 may be cooled and a size (e.g., a length) of the thermal link 130 may contract. By contrast, by reducing or stopping a flow of the water to and/or along the thermal link 130 (or heating the water provided to the thermal link 130), the thermal link 130 may be heated and the size of the thermal link 130 may expand. The actuation system 108 of the present disclosure, however, is not limited to the foregoing exemplary actuator configurations.

Referring to FIG. 9, the powerplant 20 includes a fuel system 134 for delivering the fuel to the combustor section 35 and its combustor 74. This fuel system 134 includes the one or more fuel injectors 76, a fuel source 136 and a fuel circuit 138. The fuel source 136 of FIG. 9 includes a fuel reservoir 140 and/or a fuel flow regulator 142; e.g., a valve and/or a pump. The fuel reservoir 140 is configured to store the fuel before, during and/or after turbine engine operation. The fuel reservoir 140, for example, may be configured as or otherwise include a tank, a cylinder, a pressure vessel, a bladder or any other type of fuel storage container. The fuel flow regulator 142 is configured to direct and/or meter a flow of the fuel from the fuel reservoir 140 to the fuel injectors 76. The fuel injectors 76 may be arranged circumferentially about the rotational axis 54, 56 in an array. Each fuel injector 76 is configured to direct the fuel received from the fuel source 136 into the combustion chamber 72 for mixing with the compressed core air to provide the fuel-air mixture.

The powerplant engine 24 of FIG. 1 may be configured as a non-hydrocarbon turbine engine / a hydrocarbon free turbine engine. The turbine engine, for example, may be configured as a hydrogen fueled turbine engine. The fuel injected into the combustion chamber 72 by the fuel injectors 76, for example, may be hydrogen (H₂) fuel; e.g., H₂ gas. The present disclosure, however, is not limited to hydrogen fueled turbine engines nor to non-hydrocarbon turbine engines. The powerplant engine 24, for example, may also or alternatively be fueled by another non-hydrocarbon fuel such as, but not limited to, ammonia (NH₃). The powerplant engine 24 may still also or alternatively be fueled using any other fuel, including hydrocarbon fuels (e.g., kerosene, jet fuel, sustainable aviation fuel (SAF), etc.), which produces combustion products that include water (H₂O) vapor for example.

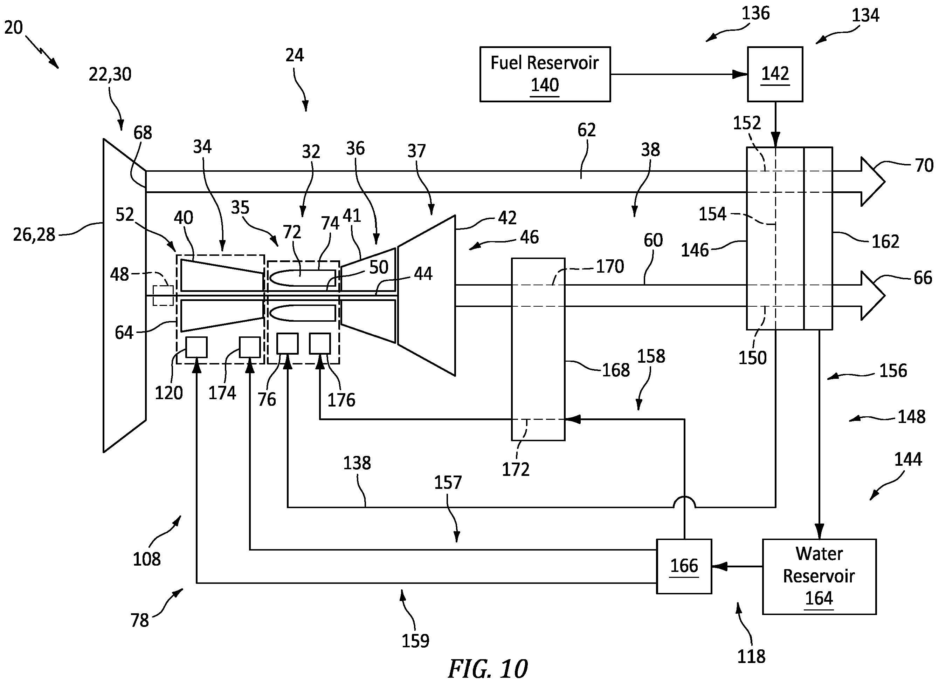

Referring to FIG. 10, the powerplant 20 may include a water and/or heat energy recovery system 144 to recover at least some of the water produced by the combustion of the fuel-air mixture within the combustion chamber 72. This recovery system 144 may be configured as the water source 118 for the actuation system 108. The recovery system 144 may also or alternatively be configured to direct at least some of the recovered water back to the powerplant engine 24 for use in its engine core 32; e.g., in the compressor section 34 and/or in the combustor section 35. The recovery system 144 of FIG. 10, for example, includes a condenser 146 and a water flow circuit 148.

The condenser 146 of FIG. 10 includes an internal combustion products passage 150, an internal bypass air passage 152 and an internal fuel passage 154, where each of these condenser passages 150, 152, 154 is fluidly discrete from one another. The combustion products passage 150 forms a portion of the core flowpath 60 which extends longitudinally through the condenser 146. This portion of the core flowpath 60 is arranged between the PT rotor 42 and the core exhaust 66. The condenser 146 of FIG. 10, for example, is arranged within the exhaust section 38. The bypass air passage 152 forms a portion of the bypass flowpath 62 which extends longitudinally through the condenser 146. The fuel passage 154 forms a portion of the fuel circuit 138 longitudinally through the condenser 146. This portion of the fuel circuit 138 may be arranged between the fuel source 136 and one or more or all of the fuel injectors 76.

The condenser 146 of FIG. 10 is schematically shown as a single pass, parallel flow heat exchanger between the combustion products passage 150 and the bypass air passage 152, and the condenser 146 is schematically shown as a single pass, crossflow heat exchanger between the combustion products passage 150 and the fuel passage 154. The condenser 146 of the present disclosure, however, is not limited to such an exemplary arrangement. The condenser 146, for example, may alternatively be configured as a crossflow heat exchanger or a counterflow heat exchanger between the combustion products passage 150 and the bypass air passage 152. The condenser 146 may also or alternatively be configured as a parallel flow heat exchanger or a counterflow heat exchanger between the combustion products passage 150 and the fuel passage 154. Any one or more of the condenser passages 150, 152, 154 may make two or more passes within the condenser 146. Moreover, while the condenser 146 is shown with the three condenser passages 150, 152 and 154, it is contemplated the bypass air passage 152 or the fuel passage 154 may be omitted in other embodiments and/or incorporated into another condenser arranged along the core flowpath 60.

The flow circuit 148 of FIG. 10 is configured with one or more circuit paths 156-159; e.g., circuit legs. This flow circuit 148 includes a water separator 162, a water reservoir 164, a water flow regulator 166 and an evaporator 168.

The water separator 162 is arranged with the condenser 146 along the core flowpath 60. The water separator 162, for example, may be configured as or otherwise include a gutter integrated with (e.g., into) the condenser 146, or connected downstream of the condenser 146 along the core flowpath 60. However, various other types of separators are known in the art, and the present disclosure is not limited to any particular ones thereof. The water separator 162, for example, may alternatively be configured as or otherwise include an impingement surface, a centrifugal water separator and/or otherwise.

The water reservoir 164 is configured to store a quantity of water before, during and/or after recovery system operation. The water reservoir 164, for example, may be configured as or otherwise include a tank, a cylinder, a pressure vessel, a bladder or any other type of water storage container. An inlet to the water reservoir 164 is fluidly coupled with an outlet from the water separator 162 along the flow circuit 148 and its source circuit path 156.

The water flow regulator 166 is configured to direct and/or meter a quantity of the water stored within the water reservoir 164 to: the liquid water circuit path 157; the gaseous water (e.g., steam) circuit path 158; and/or the actuator circuit path 159. The water flow regulator 166 of FIG. 10, for example, is arranged at an intersection between an outlet from the source circuit path 156, an inlet to the liquid water circuit path 157, an inlet to the gaseous water circuit path 158, and inlet to the actuator circuit path 159. The water reservoir 164 may thereby be fluidly coupled between the water flow regulator 166 and the water separator 162 along the flow circuit 148 and its source circuit path 156.

The evaporator 168 of FIG. 10 includes an internal combustion products passage 170 and an internal fluid (e.g., liquid water-to-gaseous water) passage 172, where each of these evaporator passages 170 and 172 is fluidly discrete from one another. The combustion products passage 170 forms a portion of the core flowpath 60 which extends longitudinally through the evaporator 168. This portion of the core flowpath 60 is arranged between the PT rotor 42 and the core exhaust 66. The evaporator 168 of FIG. 10, for example, is arranged within the exhaust section 38. More particularly, the evaporator 168 of FIG. 10 is arranged along the core flowpath 60 between the PT section 37 and the condenser 146; however, the present disclosure is not limited to such an exemplary arrangement depending on recovery system heating and cooling requirements. The fluid passage 172 forms a portion of the flow circuit 148 and its gaseous water circuit path 158 which extends longitudinally through the evaporator 168. This portion of the flow circuit 148 of FIG. 10 and its gaseous water circuit path 158 is arranged downstream of the water flow regulator 166.

The evaporator 168 of FIG. 10 is schematically shown as a single pass, counterflow heat exchanger between the combustion products passage 170 and the fluid passage 172. The evaporator 168 of the present disclosure, however, is not limited to such an exemplary arrangement. The evaporator 168, for example, may alternatively be configured as a parallel flow heat exchanger or a crossflow heat exchanger between the combustion products passage 170 and the fluid passage 172. Moreover, any one or more of the evaporator passages 170, 172 may make two or more passes within the evaporator 168.

The liquid water circuit path 157, the gaseous water circuit path 158 and/or the actuator circuit path 159 may be fluidly coupled in parallel with and downstream of the source circuit path 156. The liquid water circuit path 157 of FIG. 10 extends longitudinally out from the intersection / the water flow regulator 166 to one or more liquid water circuit components 174 (one shown in FIG. 10 for ease of illustration) of the powerplant engine 24 and its engine core 32. One or more of these liquid water circuit components 174 may each be configured as or otherwise include a liquid water injector. Each liquid water injector may be configured to inject liquid water into the core flowpath 60. One or more of the liquid water circuit components 174 may also or alternatively be configured as an outlet for introducing the liquid water for cooling the core air along the compressor section 34; e.g., intercooling the core air upstream, along and/or downstream of the compressor rotor 40. The present disclosure, however, is not limited to the foregoing exemplary components which utilize the liquid water. In particular, various other uses for liquid water in a powerplant engine are known in the art, and the present disclosure is not limited to any particular one thereof.

The gaseous water circuit path 158 of FIG. 10 extends longitudinally out from the intersection / the water flow regulator 166 to one or more gaseous water circuit components 176 (one shown in FIG. 10 for ease of illustration) of the powerplant engine 24 and its engine core 32. One or more of these gaseous water circuit components 176 may each be configured as or otherwise include a steam injector. Each steam injector may be configured to inject gaseous water - steam - into the core flowpath 60; e.g., in the combustion chamber 72. One or more of the gaseous water circuit components 176 may also or alternatively be configured as an outlet for introducing the gaseous water for cooling structures and/or fluids along and/or within the combustor section 35 and/or the turbine section 36. The present disclosure, however, is not limited to the foregoing exemplary components which utilize the gaseous water - steam. In particular, various other uses for gaseous water in a powerplant engine are known in the art, and the present disclosure is not limited to any particular one thereof.

The actuator circuit path 159 of FIG. 10 extends longitudinally out from the intersection / the water flow regulator 166 to the actuation system 108 and its actuators 120 (one shown in FIG. 10 for ease of illustration).

During operation of the recovery system 144, the bypass air may be directed into the condenser 146 and its bypass air passage 152. The fuel may be directed into the condenser 146 and its fuel passage 154. The combustion products, including the water vapor, are directed into the condenser 146 and its combustion products passage 150. The condenser 146 exchanges heat energy between the various working fluids - the bypass air, the fuel and the combustion products - flowing within the condenser 146. During normal powerplant operation, the combustion products flowing within the combustion products passage 150 are (e.g., significantly) warmer than the bypass air flowing within the bypass air passage 152 and the fuel flowing within the fuel passage 154. The condenser 146 is thereby operable to cool the combustion products using the bypass air and/or the fuel. This cooling of the combustion products may condense at least some of the water vapor (e.g., water in a gaseous phase, gaseous water) flowing within the combustion products passage 150 into liquid water droplets (e.g., water in a liquid phase). A quantity (e.g., at least some or all) of the liquid water may be collected and separated from the remaining gaseous combustion products within the core flowpath 60 by the water separator 162. The water separator 162 may subsequently direct the separated liquid water into the flow circuit 148 and its source circuit path 156 to the water reservoir 164 for (e.g., temporary) storage.

The water flow regulator 166 may selectively direct (e.g., pump, meter, guide, etc.) a quantity of the liquid water from the water reservoir 164 into the liquid water circuit path 157. The liquid water circuit path 157 may direct this quantity of the liquid water to the liquid water circuit components 174 for use with / within the engine core 32 and, for example, its compressor section 34.

The water flow regulator 166 may also or alternatively selectively direct a quantity of the liquid water from the water reservoir 164 into the gaseous water circuit path 158. The gaseous water circuit path 158 may direct this quantity of the liquid water into the fluid passage 172 of the evaporator 168. The combustion products are also directed into the evaporator 168 and its combustion products passage 170. The evaporator 168 exchanges heat energy between the various working fluids - the water and the combustion products - flowing within the evaporator 168. During normal powerplant operation, the combustion products flowing within the combustion products passage 170 are (e.g., significantly) warmer than the liquid water flowing into and within the fluid passage 172. The evaporator 168 is thereby operable to heat the water using the combustion products. This heating of the liquid water within the evaporator 168 and its fluid passage 172 may evaporate at least some or all of the liquid water flowing within the fluid passage 172 into gaseous water - steam. The gaseous water circuit path 158 may direct a quantity of this gaseous water from the evaporator 168 to the gaseous water circuit components 176 for use with / within the engine core 32 and, for example, its combustor section 35 and/or its turbine section 36.

The water flow regulator 166 may still also or alternatively selectively direct a quantity of the liquid water from the water reservoir 164 into the actuator circuit path 159. The actuator circuit path 159 may direct this quantity of the liquid water to the actuation system 108 and its actuators 120 as discussed above.

The tip clearance control system 78 may be included with various turbine engines other than the one described above. The tip clearance control system 78, for example, may be included in a geared turbine engine where a geartrain connects one or more shafts to one or more rotors. Alternatively, the tip clearance control system 78 may be included in a turbine engine configured without a geartrain. The tip clearance control system 78 may be included in a geared or non-geared turbine engine configured with a single spool, with two spools, or with more than two spools. The turbine engine may be configured as a turbofan engine, a turbojet engine, a turboprop engine, a turboshaft engine, a propfan engine, a pusher fan engine or any other type of turbine engine. The turbine engine may alternatively be configured as an auxiliary power unit (APU) or an industrial gas turbine engine. The present disclosure therefore is not limited to any particular types or configurations of turbine engines. Moreover, while the engine rotor 80 is described above as a radial flow rotor, it is contemplated the tip clearance control system 78 may also or alternatively control clearance for an axial flow rotor; e.g., an axial inflow-axial outflow rotor.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant (20), the assembly comprising:
a bladed rotor (40,41,42;80) including a rotor base (82) and a plurality of rotor blades (84) arranged circumferentially around and connected to the rotor base (82);
a shroud (100) adjacent to tips (92) of the plurality of rotor blades (84); and
an actuation system (108) including a water source (118) and an actuator (120), the actuator (120) coupled to the shroud (100), the actuation system (108) configured to direct a quantity of water from the water source (118) to the actuator (120) to control clearance (104) between the shroud (100) and the tips (92) of the plurality of rotor blades (84).

2. The assembly of claim 1, wherein the bladed rotor (40,41,42;80) comprises a radial flow rotor.

3. The assembly of claim 1 or 2, comprising:
an engine core (32) including a compressor section (34), a combustor section (35) and a turbine section (36); and
a flowpath (60) extending through the compressor section (34), the combustor section (35) and the turbine section (36) from an inlet (64) into the flowpath (60) to an exhaust (66) from the flowpath (60), the flowpath (60) further extending across the bladed rotor (40,41,42;80), optionally wherein the compressor section (34) includes the bladed rotor (40) and the shroud (100).

4. The assembly of any preceding claim, wherein the water source (118) comprises a water reservoir (164).

5. The assembly of any preceding claim, comprising:
an or the engine core (32) including a or the compressor section (34), a or the combustor section (35) and a or the turbine section (36);
a recovery system (144) comprising a condenser (146) and configured as the water source (118); and
a or the flowpath (60) extending through the compressor section (34), the combustor section (35), the turbine section (36) and the condenser from an inlet (64) into the flowpath (60) to an exhaust (66) from the flowpath (60), wherein the recovery system (144) is configured to:
condense gaseous water flowing within the flowpath (60) into liquid water using the condenser (146); and
direct at least some of the liquid water to the actuator (120) as the quantity of water from the water source (118),
optionally wherein the recovery system (144) is further configured to provide a second quantity of the liquid water to the engine core (32).

6. The assembly of claim 5, wherein:
the recovery system (144) further comprises an evaporator (168);
the recovery system (144) is configured to evaporate some of the liquid water into steam; and
the recovery system (144) is configured to provide the steam to the engine core (32), optionally wherein:
the flowpath (60) extends through the evaporator (168); and
the evaporator (168) is arranged fluidly between the turbine section (36) and the exhaust (66) along the flowpath (60).

7. The assembly of claim 5 or 6, further comprising a bypass flowpath (62) bypassing the engine core (32) and extending through the condenser (146).

8. The assembly of any of claims 5 to 7, further comprising a fuel system (134) comprising a fuel circuit (138) extending through the condenser (146), the fuel system (134) configured to deliver fuel through the fuel circuit (138) to the combustor section (35).

9. The assembly of any preceding claim, wherein the actuator (120) comprises a hydraulic cylinder (122).

10. The assembly of any preceding claim, wherein the actuator comprises a thermal link (130) wetted by the quantity of water.

11. The assembly of any preceding claim, wherein:
the bladed rotor (40,41,42;80) is rotatable about an axis (54,56,86); and
the actuation system (108) is configured to translate the shroud (100) axially along the axis (54,56,86) using the actuator (120) to control the clearance (104) between the shroud (100) and the tips (92) of the plurality of rotor blades (84).

12. The assembly of any preceding claim, wherein the actuation system (108) is configured to pivot a section (114) of the shroud (100) using the actuator (120) to control the clearance (104) between the shroud (100) and the tips (92) of the plurality of rotor blades (84).

13. The assembly of any preceding claim, comprising:
a mechanical load (22); and
a powerplant engine (24) configured to power the mechanical load (22), the powerplant engine (24) including the bladed rotor (40,41,42;80) and the shroud (100),
optionally wherein the assembly further comprises a power turbine section (37) configured to drive rotation of a propulsor rotor (26,28), the mechanical load (22) comprising the propulsor rotor (26,28).

14. An assembly for an aircraft powerplant (20), comprising:
an engine core (32) including a compressor section (34), a combustor section (35), a turbine section (36), a bladed rotor (40,41,42;80) and a shroud (100);
a flowpath (60) extending through the compressor section (34), the combustor section (35) and the turbine section (36), and the flowpath (60) extending along the shroud (100) and across the bladed rotor (40,41,42;80);
a recovery system (144) configured to recover water from combustion products flowing within the flowpath (60) downstream of the combustor section (35); and
a tip clearance control system (78) configured to control clearance (104) between the shroud (100) and the bladed rotor (40,41,42;80) using at least some of the water recovered by the recovery system (144),
optionally wherein the tip clearance control system (78) comprises an actuator (120) configured to move the shroud (100) relative to the bladed rotor (40,41,42;80), and the actuator (120) receives and is actuated by the at least some of the water recovered by the recovery system (144).

15. An assembly for an aircraft powerplant (20), comprising:
a propulsor rotor (26,28);
an engine core (32) configured to drive rotation of the propulsor rotor (26,28), the engine core (32) including a compressor section (34), a combustor section (35), a turbine section (36), a bladed rotor (40,41,42;80) and a shroud (100); and
a tip clearance control system (78) configured to control a clearance gap (104) between the shroud (100) and the bladed rotor (40,41,42;80) using water as an actuation fluid.
